# DEMANDE DE BREVET EUROPEEN

(11) **EP 4 760 441 A1**
(43) Date de publication de la demande: **17.06.2026**
(21) Numéro de dépôt: 25218288.6
(22) Date de dépôt: 25.11.2025
(51) Int. Cl.: G05D 1/87, B64C 13/50, G05D 109/25, B64C 13/04, B64C 27/56, B64C 27/68, G05D 105/22

(54) **SYSTEME DE COMMANDE DE VOL ELECTRIQUE POUR CONTROLER UN AERONEF ET AERONEF ASSOCIE**

(30) Priorité: 12.12.2024 FR 2413950
(71) Demandeur: Airbus Helicopters, 13725 Marignane Cedex (FR)
(72) Inventeur: LETONNELIER, Clément, 13580 La Fare-les-Oliviers (FR); IZZO, Pascal, 13130 Berre-l'Étang (FR); LAUBY, Constance, 13290 Aix-en-Provence (FR)
(74) Mandataire: GPI Brevets

(57) **Abrégé**

La présente invention concerne un système (5, 15, 25, 35, 45) de commande de vol électrique pour contrôler un aéronef (1), le système (5, 15, 25, 35, 45) de commande de vol comportant au moins un sous-ensemble d'acquisition (2) d'une commande de pilotage pour acquérir ladite commande de pilotage à partir d'une manœuvre d'un organe de pilotage (20) associé manœuvrable par un pilote dudit aéronef (1) selon au moins un axe de pilotage, ledit système (5, 15, 25, 35, 45) de commande de vol comportant au moins trois senseurs de position par axe de pilotage générant une information de position dudit organe de pilotage (20) et étant en communication avec ledit au moins un sous-ensemble d'acquisition (2). Chaque sous-ensemble d'acquisition (2) comporte au moins trois calculateurs simplex ayant chacun une unique voie de calcul reliée à un desdits au moins trois senseurs de position.

## Description

La présente invention concerne un système de commande de vol électrique pour contrôler un aéronef et un aéronef équipé d'un tel système.

Un aéronef peut comporter des gouvernes aérodynamiques mobiles pilotées par un système de commande de vol électrique pour diriger l'aéronef. De telles gouvernes aérodynamiques peuvent comprendre des pales de rotor, des pales d'hélices, des volets de profondeur ou de direction par exemple.

Un système de commande de vol électrique peut comporter plusieurs sous-ensembles d'acquisition d'une commande de pilotage pour acquérir cette commande à partir d'une manœuvre d'un organe de pilotage manœuvrable par un pilote et/ou un copilote de l'aéronef.

Chaque sous-ensemble d'acquisition d'une commande de pilotage peut être en tout ou partie intégré au sein d'un organe de pilotage manœuvrable par un pilote. Un tel organe de pilotage manœuvrable par un pilote peut notamment comporter une partie mobile, tel un manche, un mini-manche ou encore un levier, articulée par rapport à un support. De plus, le système de commande de vol comporte également un sous-ensemble de traitement déterminant une consigne positionnelle à atteindre pour positionner de la manière requise une ou des gouvernes aérodynamiques en fonction d'au moins une commande générée par un sous-ensemble d'acquisition de la commande de pilotage et de l'état situationnel courant de l'aéronef. Une telle consigne positionnelle peut être un angle de pas d'une pale, un angle de déflection d'un volet ou encore une vitesse de rotation d'un rotor ou d'une hélice par exemple. Enfin, le système de commande de vol comporte au moins un sous-ensemble d'actionnement commandant un actionneur agissant sur une ou plusieurs gouvernes aérodynamiques en fonction d'une consigne positionnelle déterminée par le sous-ensemble de traitement.

Les premiers aéronefs à commande de vol électrique comprenaient un système de commande de vol électrique agencé en parallèle d'un système de commande de vol mécanique de secours pour permettre un atterrissage manuel en cas de panne du système de commande de vol électrique. Bien qu'efficace, une telle architecture peut présenter l'inconvénient d'être lourde et encombrante.

Alternativement, un aéronef peut comprendre un système de commande de vol électrique à haut niveau de disponibilité et de sureté pour ne pas nécessiter une redondance mécanique.

Les règlements de certification imposent pour un tel système de commande de vol un taux d'occurrence de panne inférieur ou égal à 10⁻⁹/heure de vol, ce qui conduit à un taux d'occurrence de panne inférieur ou égal à 10⁻¹⁰/heure de vol pour chaque sous-ensemble.

En particulier, un système de commande de vol électrique peut comprendre un ou plusieurs senseurs de position générant une information de position de l'organe de pilotage et étant en communication avec un sous-ensemble d'acquisition.

Dans ce contexte, un sous-ensemble d'acquisition classique peut comporter plusieurs calculateurs d'acquisition permettant d'acquérir les commandes générées selon les différents axes de commande de l'organe de pilotage.

Chaque calculateur d'acquisition est en outre un calculateur duplex synchrone et présente deux voies de calcul reliées chacune à un des senseurs de position de cet axe de commande.

L'expression « calculateur duplex » désigne, ici et par la suite, un calculateur qui comporte deux voies de calcul indépendantes dont l'exécution est synchronisée contrairement à un calculateur simplex qui ne comporte qu'une seule voie de calcul. L'expression « voie de calcul » désigne une unité de traitement digitale et/ou analogique qui permet d'effectuer des calculs sur des grandeurs représentées de façon digitale et ou analogique. L'unité de traitement peut effectuer un traitement digital avec un processeur ou d'autre formes de circuit intégré dont des circuits logiques. L'unité de traitement peut effectuer un traitement analogique avec des composants analogiques intégrés ou non dans des circuits intégrés tels, par exemple, des amplificateurs opérationnels. Le terme processeur peut désigner aussi bien une unité centrale de traitement connue sous l'acronyme CPU, une unité graphique de traitement GPU, une unité digitale connue sous l'acronyme DSP, un microcontrôleur, etc. A titre d'exemple, un calculateur duplex peut comprendre deux voies de calcul ayant chacune un processeur, alors qu'un calculateur simplex comporte une unique voie de calcul ayant par exemple un processeur.

Un calculateur duplex synchrone comporte une voie de calcul dite par la suite « voie de calcul de commande » utilisée pour générer la sortie souhaitée, et une voie de calcul dite par la suite « voie de calcul de surveillance » en charge de surveiller le fonctionnement de la voie de calcul de commande en parallèle et de l'invalider si une panne est détectée.

Le document WO2023/209335 A1 n'appartient pas au domaine technique en décrivant un système comprenant deux organes de commande, un organe de commande destiné à être actionné par un pilote et l'autre destiné à être actionné par le co-pilote.

Ces organes de commande permettent le pilotage d'un pas collectif des pales d'un rotor de giravion. Chaque organe de commande est équipé de deux moteurs, pour que le retour de force appliqué à chaque organe de commande puisse être contrôlé à la fois par une unité de commande propre à cet organe de commande et par une autre unité de commande à distance à l'aide d'un bus de communication.

Une telle architecture ayant des sous-ensembles comportant des calculateurs duplex synchrones peut s'avérer encombrante.

En outre, des équipements des sous-ensembles d'un système de commande de vol électrique d'un aéronef peuvent faire partie d'une liste d'équipements de référence dénommée en anglais « Master Minimum Equipment List (MMEL) ». Cette liste définit la liste des équipements qui peuvent être inopérants pour le vol, les conditions à respecter pour permettre un vol en conformité avec les objectifs des autorités de certification et le nombre de jours ou heures de vol autorisés à partir de la découverte de la panne. Cette condition supplémentaire amène d'autres contraintes et induit en particulier l'atteinte d'un taux d'occurrence de panne pour le système de commande de vol inférieur ou égal à une valeur comprise entre 10⁻⁷ et 10⁻⁸/heure de vol avec un équipement de référence en panne, soit un taux d'occurrence de panne au niveau des sous-ensembles inférieur ou égal à une valeur comprise entre 10⁻⁸ et 10⁻⁹/heure de vol avec un équipement de référence en panne. Il est à noter qu'un équipement dont la probabilité d'occurrence de panne est inférieure à un seuil d'acceptabilité, typiquement de 10⁻⁵/heure de vol, n'est pas considéré. Autrement dit, on accepte que la panne d'un équipement ayant un taux de panne inférieur au seuil d'acceptabilité entraîne une immobilisation de l'aéronef.

Par suite, chaque sous-ensemble doit donc présenter un taux d'occurrence de panne de 10⁻¹⁰/heure de vol en conditions normales et le cas échéant de 10⁻⁸ à 10⁻⁹/heure de vol en conditions MMEL, à savoir si le vol est autorisé pendant un certain nombre d'heures de vol en cas de panne d'un équipement de référence du sous-ensemble.

Le document US 5694014A1 concerne un système de commande électrique de type « fly-by-wire » qui incorpore une surveillance redondante et intègre une commande manuelle pour permettre le pilotage d'un avion.

Des capteurs de position et de couple surveillent les mouvements de la commande manuelle et fournissent des signaux d'entrée à un générateur de retour de force.

Des capteurs de position fournissent alors des signaux de position à des contrôleurs de vol primaires quad-redondants. Ces contrôleurs de vol primaires peuvent ainsi former un sous-ensemble d'acquisition comportant trois ou quatre contrôleurs ayant chacun une unique voie de calcul reliée à un des trois ou quatre senseurs de position.

Le document US 2024228023A1, divulgue quant à lui des servo-actionneurs fly-by-wire (FBW) pour le contrôle de vol primaire d'aéronefs, y compris des servo-actionneurs avec des ordinateurs de contrôle de vol intégrés (FCC).

En outre, une unité de capteur de pédales de gouvernail peut comprendre un premier capteur de position et un second capteur de position. Le premier capteur de position peut être différent du second capteur, et chaque capteur de position peut être couplé à un canal de traitement respectif. Un premier canal de traitement peut également être différent du canal de traitement.

Le document US 20110108673A1 décrit un dispositif de contrôle électronique de fonctionnement d'un organe de pilotage, dit organe de pilotage contrôlé, d'un dispositif de pilotage d'aéronef comprenant deux organes de pilotage reliés à au moins un même organe de conduite de l'aéronef. Ce dispositif de contrôle électronique de fonctionnement comprend des entrées de réception de signaux délivrés par des capteurs associés à l'un des organes de pilotage et des circuits électroniques de traitement numérique des signaux reçus sur les entrées.

Le document US8761969B2 se rapporte quant à lui à un système de commande de vol présent dans un aéronef. Le système de commande de vol présente un module de commande pour transmettre des ordres à une pluralité d'actionneurs.

La présente invention a alors pour objet de proposer un système de commande de vol électrique innovant.

L'invention concerne donc un système de commande de vol électrique pour contrôler un aéronef, le système de commande de vol comportant au moins un sous-ensemble d'acquisition d'une commande de pilotage pour acquérir cette commande de pilotage à partir d'une manoeuvre d'un organe de pilotage associé manœuvrable par un pilote de l'aéronef selon au moins un axe de pilotage, le système de commande de vol comportant au moins trois senseurs de position par axe de pilotage, chaque senseur de position générant une information de position de l'organe de pilotage et étant en communication avec ledit au moins un sous-ensemble d'acquisition, chaque sous-ensemble d'acquisition comportant au moins trois calculateurs simplex ayant chacun une unique voie de calcul reliée à un desdits au moins trois senseurs de position.

Ce système est remarquable en ce que, au moins deux calculateurs parmi lesdits au moins trois calculateurs simplex sont dissimilaires et au moins deux senseurs de position parmi lesdits au moins trois senseurs de position sont dissimilaires.

Dès lors, chaque calculateur simplex d'un tel sous-ensemble d'acquisition présente typiquement un taux d'occurrence de panne inférieur ou égal à 10⁻⁴/heure de vol, ce qui induit un taux d'occurrence de panne inférieur ou égal à 10⁻¹⁰/heure de vol en conditions normales pour ce sous-ensemble.

En outre, les au moins deux calculateurs de chaque sous-ensemble d'acquisition peuvent comporter au moins un calculateur dit « primaire » et au moins un calculateur dit « secondaire » dissimilaires ce qui participe à l'obtention des taux d'occurrence de panne souhaités en prenant en considération la probabilité d'occurrence d'une panne de mode commun.

Les dissimilarités sont des dissimilarités de type « physique » par exemple par le biais de l'utilisation de fournisseurs de composants différents, de fabricants de circuits imprimés différents ou autres, et de type « logiciel » par le biais par exemple de différents jeux d'instructions, de différents algorithmes, de langages de programmation différents, ou autres.

Pour améliorer les dissimilarités, les liaisons avec les autres sous-ensembles de chacun des calculateurs primaires et secondaires d'un sous-ensemble peuvent cheminer sur des routes différentes au sein de l'aéronef pour éviter les modes communs de panne.

Un tel sous-ensemble d'acquisition peut aussi répondre aux contraintes liées aux conditions MMEL comme expliqué par la suite.

Ainsi, chaque sous-ensemble d'acquisition peut présenter un taux d'occurrence de panne inférieur à 10⁻¹⁰/heure de vol, tout en présentant un niveau de dissimilarité optimisé, voire un coût et/ou un encombrement optimisés. Un tel sous-ensemble d'acquisition peut alors permettre d'optimiser le coût, le volume, et/ou la masse du système, en particulier en raison de l'utilisation de calculateurs simplex.

Le système de commande de vol électrique peut de plus comporter une ou plusieurs des caractéristiques qui suivent, prises seules ou en combinaison.

En pratique, le système de commande de vol peut comporter au moins deux moteurs configurés pour appliquer conjointement une loi d'effort à une partie mobile de l'organe de pilotage.

De tels moteurs sont pilotés par les au moins trois calculateurs simplex du sous-ensemble d'acquisition correspondant.

Ces moteurs permettent ainsi de générer une force sur la partie mobile de l'organe de pilotage lorsque cette partie mobile est déplacée par un pilote de l'aéronef par rapport à un support. De tels organes de pilotage sont généralement désignés par le terme « actifs ». En outre, il est alors envisageable de modifier des caractéristiques de la loi d'effort, tel un gradient de force, un amortissement, une inertie ou encore de mettre en œuvre une butée, à l'aide d'un asservissement en boucle fermée des au moins deux moteurs.

De tels moteurs peuvent être identiques ou encore dissimilaires.

Selon une première variante du système de commande, lesdits au moins trois calculateurs simplex peuvent comporter deux calculateurs primaires simplex identiques et deux calculateurs secondaires simplex identiques et dissimilaires des deux calculateurs primaires simplex.

Les termes « primaire » et « secondaire » dans les expressions « calculateur primaire » et « calculateur secondaire » sont utilisés pour distinguer les deux types dissimilaires de calculateurs simplex. Les expressions « calculateur primaire simplex » et « calculateur secondaire simplex » peuvent être remplacées respectivement par « calculateur simplex d'un premier type » et « calculateur simplex d'un second type ».

Selon un premier exemple de réalisation de la première variante, lesdits au moins deux moteurs peuvent comporter quatre moteurs, deux moteurs étant individuellement connectés à deux calculateurs primaires simplex via deux connexions de commande et deux autres moteurs étant individuellement connectés à deux calculateurs secondaires simplex via deux autres connexions de commande pour pouvoir recevoir un signal de commande représentatif de la loi d'effort à appliquer à la partie mobile de l'organe de pilotage, chaque moteur étant connecté soit à deux connexions de surveillance primaires des deux calculateurs primaires simplex, soit à deux connexions de surveillance secondaires des deux calculateurs secondaires simplex pour pouvoir émettre un signal de surveillance représentatif d'un état moteur.

Dans ce premier exemple, chaque moteur est ainsi piloté par un calculateur simplex dédié mais est surveillé par deux calculateurs simplex d'un même type.

Cette architecture permet à chaque calculateur simplex de couper la commande du moteur de l'autre calculateur simplex du même type.

Les calculateurs simplex identiques communiquent entre eux pour harmoniser les lois d'efforts commandées et éviter que les moteurs génèrent des efforts contraires s'opposant l'un à l'autre.

Contrairement à l'état de l'art, l'invention propose alors une architecture active avec l'utilisation de quatre moteurs identiques et de quatre calculateurs simplex, dissimilaires deux à deux, avec l'implémentation d'une architecture de type COM/MON dans ces calculateurs simplex. Cette architecture permet à chaque calculateur simplex de générer à la fois des instructions de commande COM afin de générer un premier ordre de manière classique, par exemple une loi d'effort à appliquer par un moteur et en exécutant des instructions de surveillance MON pour surveiller une loi d'effort à appliquer par un autre moteur.

Cette architecture présente donc un encombrement plus optimisé, répond aux contraintes de dissimilarité et est compatible avec des contraintes de sécurité de la fonction en conditions MMEL.

Selon un deuxième exemple de réalisation de la première variante, lesdits au moins deux moteurs peuvent comporter :
- un premier moteur connecté à une première connexion de commande d'un premier calculateur primaire simplex pour pouvoir recevoir un premier signal de commande représentatif de la loi d'effort à appliquer à l'organe de pilotage,
- un deuxième moteur connecté à une seconde connexion de commande d'un second calculateur primaire simplex pour pouvoir recevoir un deuxième signal de commande représentatif de la loi d'effort à appliquer à l'organe de pilotage, et
- un troisième moteur connecté sur commande soit à une première connexion de commande d'un premier calculateur secondaire simplex, soit à une seconde connexion de commande d'un second calculateur secondaire simplex pour pouvoir recevoir un troisième signal de commande représentatif de la loi d'effort à appliquer à l'organe de pilotage.

Dans ce cas, les différents calculateurs simplex ne fonctionnement plus selon une architecture de type COM/MON comme dans le premier exemple de réalisation de la première variante. Les calculateurs simplex peuvent cependant s'auto-monitorer au travers d'une brique de surveillance matérielle dite « HM » acronyme de l'expression en langue anglaise « Hardware Monitoring ». Une telle brique peut alors être simple à mettre en œuvre et être intégrée dans chacun des calculateurs simplex.

Chaque calculateur primaire simplex contrôle toujours un moteur. En revanche, le troisième moteur peut être contrôlé par l'un ou l'autre des calculateurs secondaires simplex afin d'améliorer la disponibilité du sous-ensemble d'acquisition d'une commande de pilotage.

Ce deuxième exemple de la première variante présente l'avantage d'être moins encombrant par rapport au premier exemple grâce à la suppression d'un moteur.

Une telle brique de surveillance matérielle peut être mise en œuvre par un procédé de tests en continu généralement désigné par l'expression anglaise « Continuous Build In Test » ou son acronyme « CBIT ». Un tel procédé CBIT est alors sécurisé par exemple avec une alimentation indépendante et/ou un chien de garde et une vérification de la cohérence de la commande moteur et d'une position moteur réalisée.

Dans ce cas, le premier moteur peut être connecté à deux premières connexions de surveillance primaires du premier calculateur primaire simplex pour pouvoir émettre un premier signal de surveillance représentatif d'un état moteur du premier moteur, le deuxième moteur peut être connecté à deux deuxièmes connexions de surveillance primaires du deuxième calculateur primaire simplex pour pouvoir émettre un deuxième signal de surveillance représentatif d'un état moteur du deuxième moteur, et le troisième moteur peut être connecté à la fois à deux premières connexions de surveillance secondaires du premier calculateur secondaire simplex et à deux deuxièmes connexions de surveillance secondaires du deuxième calculateur secondaire simplex pour pouvoir émettre un troisième signal de surveillance représentatif d'un état moteur du troisième moteur.

Plus précisément, l'une des deux premières connexions de surveillance primaires est reliée avec une première brique de surveillance matérielle du premier calculateur primaire simplex. Ainsi, les deux premières connexions de surveillance primaires sont indépendantes.

De même, l'une des deux deuxièmes connexions de surveillance primaires est reliée avec une deuxième brique de surveillance matérielle du deuxième calculateur primaire simplex et les deux deuxièmes connexions de surveillance primaires sont indépendantes.

L'une des deux premières connexions de surveillance secondaires est reliée avec une troisième brique de surveillance matérielle du premier calculateur secondaire simplex. Ainsi, les deux premières connexions de surveillance secondaires sont indépendantes.

De même, l'une des deux deuxièmes connexions de surveillance secondaires est reliée avec une quatrième brique de surveillance matérielle du deuxième calculateur secondaire simplex et les deux deuxièmes connexions de surveillance secondaires sont indépendantes.

De plus, le troisième moteur peut être connecté électriquement à un dispositif de basculement, le dispositif de basculement étant relié électriquement au premier calculateur secondaire simplex et au deuxième calculateur secondaire simplex et étant configuré pour connecter le troisième moteur soit au premier calculateur secondaire simplex, soit au deuxième calculateur secondaire simplex, les premier calculateur secondaire simplex et deuxième calculateur secondaire simplex étant auto-monitorés et communiquant un premier signal de validité et un second signal de validité respectivement à, d'une part, un premier interrupteur et un deuxième interrupteur reliés en série et, d'autre part, un troisième interrupteur et un quatrième interrupteur reliés en série du dispositif de basculement.

Un tel basculement de contrôle peut être effectué par exemple au moyen de relais formant les premier, deuxième, troisième et quatrième interrupteurs, ou d'autres types de système.

Dans le cas correspondant à cette première variante du système de commande, lesdits au moins trois senseurs de position peuvent comporter deux senseurs de position primaires identiques et deux senseurs de position secondaires identiques et dissimilaires des deux senseurs de position primaires.

Par exemple, les deux senseurs de position primaires peuvent être choisis selon une première technologie et les deux senseurs de position secondaires peuvent être choisis selon une seconde technologie différente de la première technologie.

Ces première et seconde technologies différentes peuvent être choisies parmi les capteurs de position à effet Hall, les capteurs de type transducteur électromagnétique ou « resolver », ou encore les capteurs de type transformateur différentiel rotatif variable également désigné par l'acronyme « RVDT » de l'expression en langue anglaise « Rotary Variable Differential Transformer ».

Selon une deuxième variante du système de commande, lesdits au moins trois calculateurs simplex peuvent comporter un calculateur primaire simplex, un calculateur secondaire simplex et un calculateur tertiaire simplex tous dissimilaires entre eux.

Cette deuxième variante présente l'avantage d'être moins encombrante que la première variante puisqu'elle n'intègre que trois moteurs et trois calculateurs simplex.

Chaque calculateur simplex comporte une brique de surveillance matérielle dite « HM » de manière à ce que chacun des calculateurs puisse assurer la commande d'un moteur et la surveillance d'un autre moteur et fait une acquisition de position grâce à un capteur dédié.

Cette architecture peut être qualifiée de triplex, ce qui en fait l'architecture la plus compacte. Une dissimilarité complète au niveau des calculateurs permet de supprimer le mode commun de panne sur ces calculateurs.

Selon une troisième variante du système de commande, lesdits au moins trois calculateurs simplex peuvent comporter deux calculateurs primaires simplex identiques, deux calculateurs secondaires simplex identiques et dissimilaires des deux calculateurs primaires simplex et deux calculateurs tertiaires simplex identiques et dissimilaires à la fois des deux calculateurs primaires simplex et des deux calculateurs secondaires simplex.

Cette troisième variante comprend ainsi six calculateurs simplex, dissimilaires trois par trois. Ces six calculateurs ne présentent ni une architecture de type COM/MON, ni une architecture munie d'une brique de surveillance matérielle dite « HM ».

Cependant, un vote peut être effectué au niveau de chaque moteur pour décider quel calculateur va piloter et surveiller ce moteur.

Cette architecture a l'avantage de n'avoir que deux moteurs, et d'assurer un haut niveau de disponibilité grâce aux trois calculateurs simplex pour un moteur.

Dans cette variante, chacun des moteurs est piloté par trois unités de traitement de trois voies différentes primaire, secondaire et tertiaire. La commande effective de chaque moteur est effectuée par un vote sur les trois commandes. Les capteurs de position sont également définis par trois voies différentes.

Dans un cas correspondant à la deuxième ou à la troisième variante du système de commande, lesdits au moins trois senseurs de position peuvent comporter un senseur de position primaire, un senseur de position secondaire dissimilaire du senseur de position primaire et un senseur de position tertiaire dissimilaire à la fois du senseur de position primaire et du senseur de position secondaire.

Plus précisément, le senseur de position primaire peut être choisi selon une première technologie, le senseur de position secondaire peut être choisi selon une deuxième technologie différente de la première technologie et le senseur de position tertiaire peut être choisi selon une troisième technologie différente de la première technologie et de la deuxième technologie.

Ces première, deuxième et troisième technologies différentes peuvent être choisies parmi les capteurs de position à effet Hall, les capteurs de type transducteur électromagnétique ou « resolver », ou encore les capteurs de type transformateur différentiel rotatif variable également désigné par l'acronyme « RVDT » de l'expression en langue anglaise « Rotary Variable Differential Transformer.

En pratique, le sous-ensemble d'acquisition peut être intégré dans l'organe de pilotage.

Plus précisément, ce sous-ensemble d'acquisition peut être intégré dans l'organe de pilotage tel un manche de commande d'un pas collectif ou d'un pas cyclique des pales d'un rotor ou d'une hélice de giravion.

Ainsi, dans le cas où l'organe de pilotage est un manche de commande d'un pas collectif, celui-ci permet alors de contrôler l'aéronef suivant un axe et le système de commande comporte alors trois senseurs de position permettant de déterminer une position de la partie mobile par rapport au support de l'organe de pilotage.

En revanche, lorsque l'organe de pilotage est un manche de commande d'un pas cyclique, celui-ci permet alors de contrôler l'aéronef suivant deux axes, un axe en tangage et un axe en roulis, et le système de commande comporte alors trois senseurs de position pour l'axe de tangage et trois senseurs de position pour l'axe de roulis. Ces six senseurs de position permettent ainsi de déterminer une position de la partie mobile par rapport au support de l'organe de pilotage.

La présente invention a aussi pour objet un aéronef muni d'un système de commande de vol électrique pour contrôler l'aéronef.

Un tel aéronef est remarquable en ce que le système de commande de vol est tel que décrit précédemment.

En pratique un tel aéronef peut être un giravion et comporte un système de commande de vol électrique pour piloter un pas collectif ou un pas cyclique des pales d'un rotor ou d'une hélice de giravion.

L'invention et ses avantages apparaîtront avec plus de détails dans le cadre de la description qui suit avec des exemples donnés à titre illustratif en référence aux figures annexées qui représentent :
la figure 1, une vue schématique d'un aéronef ayant un système de commande de vol électrique conforme à l'invention,
la figure 2, une vue schématique d'un système de commande de vol électrique selon un premier exemple de réalisation d'une première variante conforme à l'invention,
la figure 3, une vue schématique d'un système de commande de vol électrique selon un deuxième exemple de réalisation de la première variante conforme à l'invention,
la figure 4, une vue schématique d'un système de commande de vol électrique selon un troisième exemple de réalisation la première variante conforme à l'invention,
la figure 5, une vue schématique d'un dispositif de basculement de la figure 4, conformément à l'invention,
la figure 6, une vue schématique d'un système de commande de vol électrique selon une deuxième variante conforme à l'invention, et
la figure 7, une vue schématique d'un système de commande de vol électrique selon une troisième variante conforme à l'invention.

Les éléments présents dans plusieurs figures distinctes sont affectés d'une seule et même référence.

Comme déjà évoqué l'invention se rapporte à un aéronef équipé d'un système de commande de vol électrique pour contrôler cet aéronef.

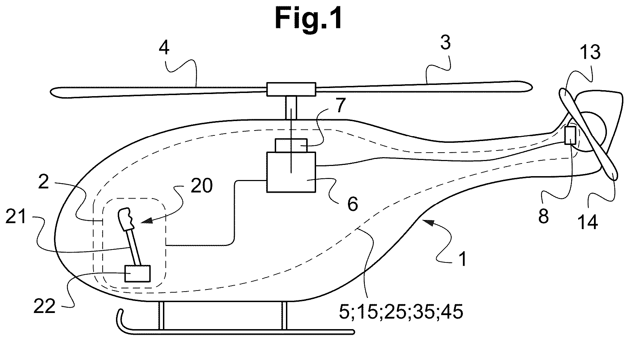

Tel que représenté à la figure 1, un tel aéronef 1 peut se présenter sous la forme d'un giravion comportant au moins un rotor 3, 13 pour commander la sustentation et/ou la propulsion de cet aéronef 1.

Plus généralement, l'aéronef 1 peut comporter des gouvernes aérodynamiques 4, 14 mobiles pilotées par un système de commande de vol électrique 5, 15, 25, 35, 45 pour diriger l'aéronef 1. De telles gouvernes aérodynamiques 4, 14 peuvent comprendre des pales de rotor 3, 13, des pales d'hélices, des volets de profondeur ou de direction par exemple.

Un tel système 5, 15, 25, 35, 45 de commande de vol comporte alors au moins un sous-ensemble d'acquisition 2 d'une commande de pilotage réalisée par un pilote ou un copilote de l'aéronef 1.

Un tel sous-ensemble d'acquisition 2 permet ainsi d'acquérir cette commande de pilotage en déplaçant un organe de pilotage 20 associé manœuvrable par le pilote de l'aéronef 1 selon au moins un axe de pilotage.

Un tel organe de pilotage 20 peut par exemple se présenter sous la forme d'un manche ou d'un mini-manche permettant de piloter un pas cyclique des pales ou d'un levier permettant de piloter un pas collectif des pales.

L'organe de pilotage 20 comporte alors une partie mobile 21 comportant au moins un degré de mobilité par rapport à un support 22. Chaque sous-ensemble d'acquisition 2 permet ainsi de générer une commande encodée correspondant à une position de la partie mobile 21 selon chaque degré de mobilité de cette partie mobile 21.

Le système 5, 15, 25, 35, 45 de commande de vol électrique comprend un sous-ensemble de traitement 6 générant au moins une consigne positionnelle, à atteindre par une ou des gouvernes aérodynamiques 3, 13 en fonction d'au moins une commande encodée par le ou les sous-ensembles d'acquisition 2 de la commande de pilotage et de l'état situationnel courant de l'aéronef 1.

En outre, un tel système 5, 15, 25, 35, 45 de commande de vol comporte également au moins un sous-ensemble d'actionnement 7, 8 commandant un actionneur agissant directement ou indirectement sur une ou plusieurs gouvernes aérodynamiques 3, 13 en fonction d'une consigne positionnelle déterminée par le sous-ensemble de traitement 6.

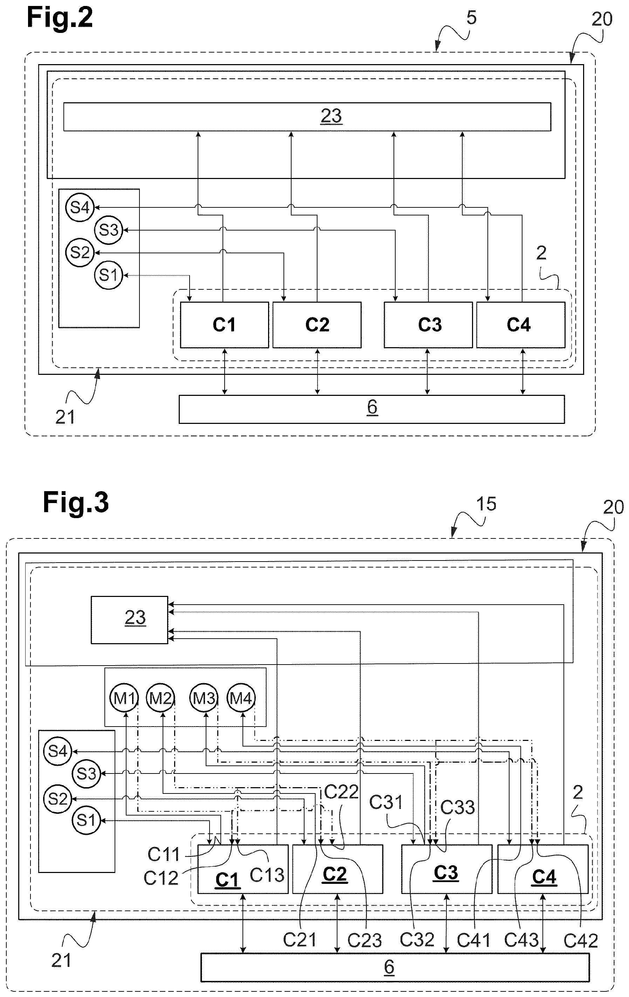

Tel que représenté aux figures 2 à 7, un tel système 5, 15, 25, 35, 45 de commande de vol comporte alors au moins trois senseurs de position S1, S2, S3, S4, S1', S2', S3' par axe de pilotage, chaque senseur de position S1, S2, S3, S4, S1', S2', S3' générant une information de position de l'organe de pilotage 20 et étant en communication avec le ou les sous-ensembles d'acquisition 2.

Par ailleurs, chaque sous-ensemble d'acquisition 2 comporte au moins trois calculateurs simplex C1, C1', C1", C2, C2', C2", C3, C3', C3", C4, C4", C5", C6" ayant chacun une unique voie de calcul reliée à un desdits au moins trois senseurs de position S1, S2, S3, S4, S1', S2', S3'.

En outre, au moins deux calculateurs C1, C1', C1", C2, C2', C2", C3, C3', C3", C4, C4", C5", C6" parmi lesdits au moins trois calculateurs simplex C1, C1', C1", C2, C2', C2", C3, C3', C3", C4, C4", C5", C6" sont dissimilaires et au moins deux senseurs de position S1, S2, S3, S4, S1', S2', S3' parmi lesdits au moins trois senseurs de position S1, S2, S3, S4, S1', S2', S3' sont dissimilaires.

Ainsi, selon un premier exemple de réalisation d'une première variante, et tel que représenté à la figure 2, un sous-ensemble d'acquisition 2 peut comporter deux calculateurs primaires simplex C1, C2 identiques et deux calculateurs secondaires simplex C3, C4 identiques et dissimilaires des deux calculateurs primaires simplex C1, C2.

En outre, un tel sous-ensemble d'acquisition 2 peut être avantageusement intégré dans l'organe de pilotage 20 et plus précisément dans le support 22de cet organe de pilotage 20.

Chaque calculateur simplex C1, C2, C3, C4 reçoit des données d'entrée d'un ensemble de senseurs de position S1, S2, S3, S4 respectif.

En effet, le système 5 de commande de vol comporte quatre senseurs de position S1, S2, S3, S4, chaque senseur de position S1, S2, S3, S4 générant une information de position de l'organe de pilotage 20 et étant en communication avec le sous-ensemble d'acquisition 2.

En pratique, les quatre senseurs de position S1, S2, S3, S4 peuvent comporter deux senseurs de position primaires S1, S2 identiques et deux senseurs de position secondaires S3, S4 identiques et dissimilaires des deux senseurs de position primaires S1, S2.

Par le terme de senseur, on entend ici un capteur physique capable de mesurer directement le paramètre en question mais aussi un système pouvant comprendre un ou plusieurs capteur(s) physique(s) ainsi que des moyens de traitement du signal permettant de fournir une estimation du paramètre à partir des mesures fournies par ces capteurs physiques. De manière similaire, on désignera par mesure de ce paramètre aussi bien une mesure brute d'un capteur physique qu'une mesure obtenue par un traitement de signal plus ou moins complexe à partir de mesures brutes.

En outre, au moins un bouton poussoir 23 de type impulsionnel peut également équiper l'organe de pilotage 20. Des informations relatives à un état appuyé ou un état relâché de chaque bouton poussoir 23 peuvent être générées alternativement par une pression puis un relâchement opérés successivement sur un bouton poussoir 23. De tels informations sont alors transmises aux différents calculateurs simplex C1-C4 avant d'être transmises au sous-ensemble de traitement 6.

Selon un deuxième exemple de réalisation de la première variante tel que représenté à la figure 3, en plus des senseurs de position S1-S4 et des calculateurs simplex C1-C4, le système 15 de commande de vol peut comporter au moins deux moteurs M1, M2, M3, M4 identiques configurés pour appliquer conjointement une loi d'effort à la partie mobile 21 de l'organe de pilotage 20. De tels moteurs M1, M2, M3, M4 permettent alors de rendre actif l'organe de pilotage 20.

Plus précisément, le système 15 peut comporter quatre moteurs, ces moteurs M1, M2, M3, M4 étant respectivement connectés, via une connexion de commande C11, C21, C31, C41, aux calculateurs simplex C1, C2, C3, C4 pour pouvoir recevoir un signal de commande représentatif de ladite loi d'effort à appliquer à la partie mobile 21 de l'organe de pilotage 20.

Par ailleurs, le premier moteur M1 peut être connecté à deux connexions de surveillance primaires C12, C22 des deux calculateurs primaires simplex C1, C2 pour leur transmettre un signal de surveillance représentatif d'un état moteur.

De même, le deuxième moteur M2, peut être connecté à deux autres connexions de surveillance primaires C13, C23 des deux calculateurs primaires simplex C1, C2 pour leur transmettre un signal de surveillance représentatif d'un état moteur.

Le moteur troisième M3 peut quant à lui être connecté à deux connexions de surveillance secondaires C32, C42 des deux calculateurs secondaires simplex C3, C4 pour leur transmettre un signal de surveillance représentatif d'un état moteur.

Enfin, le quatrième moteur M4 peut être connecté à deux autres connexions de surveillance secondaires C33, C43 des deux calculateurs secondaires simplex C3, C4 pour leur transmettre un signal de surveillance représentatif d'un état moteur.

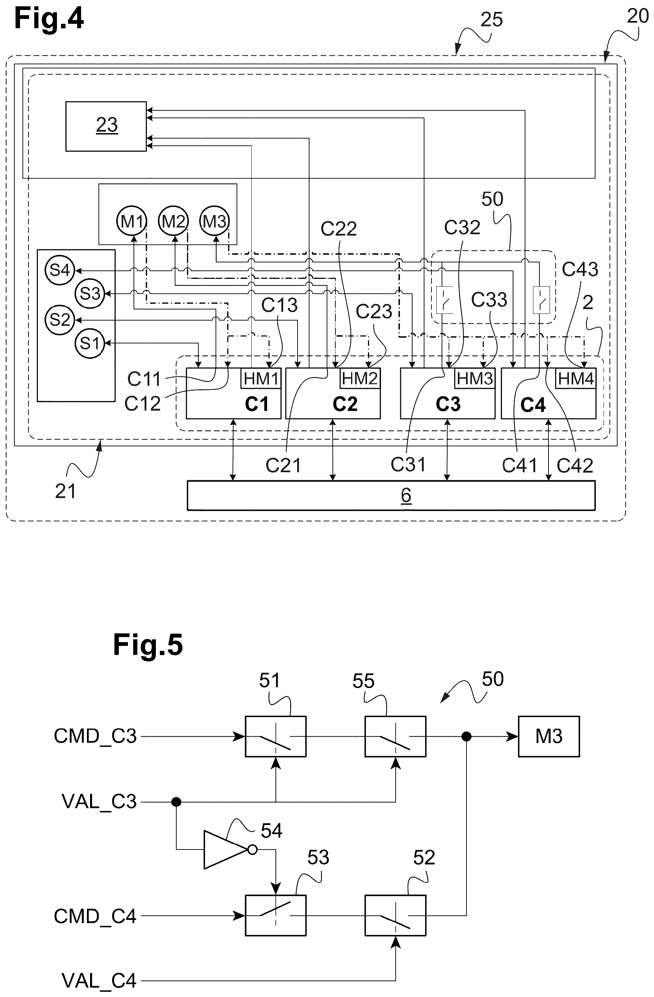

Selon un troisième exemple de réalisation la première variante tel que représenté à la figure 4, le système 25 peut comporter trois moteurs M1, M2, M3 reliés à deux calculateurs primaires simplex C1, C2 et deux calculateurs secondaires simplex C3, C4.

Ainsi, un premier moteur M1 peut être connecté à une première connexion de commande C11 d'un premier calculateur primaire simplex C1 pour pouvoir recevoir un premier signal de commande représentatif de la loi d'effort à appliquer à l'organe de pilotage 20.

Un tel premier moteur M1 peut alors être connecté à deux premières connexions de surveillance primaires C12, C13 du premier calculateur primaire simplex C1 pour leur transmettre un premier signal de surveillance représentatif d'un état moteur du premier moteur M1. La première connexion de surveillance primaire C13 est alors reliée avec une première brique de surveillance matérielle HM1 du premier calculateur primaire simplex C1.

Un deuxième moteur M2 peut être connecté à une seconde connexion de commande C21 d'un second calculateur primaire simplex C2 pour pouvoir recevoir un deuxième signal de commande représentatif de la loi d'effort à appliquer à l'organe de pilotage 20.

Un tel deuxième moteur M2 peut également être connecté à deux deuxièmes connexions de surveillance primaires C22, C23 du deuxième calculateur primaire simplex C2 pour leur transmettre un deuxième signal de surveillance représentatif d'un état moteur du deuxième moteur M2.

La deuxième connexion de surveillance primaire C23 est alors reliée avec une deuxième brique de surveillance matérielle HM2 du deuxième calculateur primaire simplex C2.

Enfin, un troisième moteur M3 peut quant à lui être connecté à chaque instant soit à une première connexion de commande C31 d'un premier calculateur secondaire simplex C3, soit à une seconde connexion de commande C41 d'un second calculateur secondaire simplex C4 pour pouvoir recevoir un troisième signal de commande représentatif de la loi d'effort à appliquer à l'organe de pilotage 20.

Dès lors, le troisième moteur M3 peut être connecté électriquement à un dispositif de basculement 50. Un tel dispositif de basculement 50 est quant à lui relié électriquement à la fois au premier calculateur secondaire simplex C3 et au deuxième calculateur secondaire simplex C4.

Tel que représenté plus en détail à la figure 5, un tel dispositif de basculement 50 est outre configuré pour connecter le troisième moteur M3 soit au premier calculateur secondaire simplex C3, soit au deuxième calculateur secondaire simplex C4 en fonction de signaux de validité VAL_C3, VAL_C4 générés par le premier calculateur secondaire simplex C3 et par le deuxième calculateur secondaire simplex C4.

En effet, les premier calculateur secondaire simplex C3 et deuxième calculateur secondaire simplex C4 peuvent être auto-monitorés au travers d'une brique de surveillance matérielle dite « HM » acronyme de l'expression en langue anglaise « Hardware Monitoring ». Une telle brique peut alors être simple à mettre en œuvre et être intégrée dans chacun des calculateurs secondaires simplex C3, C4.

Plus précisément, une première connexion de surveillance secondaire C33 est alors reliée avec une troisième brique de surveillance matérielle HM3 du premier calculateur secondaire simplex C3 et une deuxième connexion de surveillance secondaire C43 est alors reliée avec une quatrième brique de surveillance matérielle HM4 du deuxième calculateur secondaire simplex C4.

Le premier calculateur secondaire simplex C3 peut alors communiquer un premier signal de validité VAL_C3 à un premier interrupteur 51 et à un deuxième interrupteur 55 connectés en série du dispositif de basculement 50.

De même, le deuxième calculateur secondaire simplex C4 peut communiquer un second signal de validité VAL_C4 à un troisième interrupteur 52 du dispositif de basculement 50.

Tel que représenté, le dispositif de basculement 50 peut comporter le premier interrupteur 51 et le deuxième interrupteur 55 relié à la fois à un signal de commande CMD_C3 du premier calculateur secondaire simplex C3 à un signal de validité VAL_C3 du premier calculateur secondaire simplex C3 permettant soit de fermer conjointement le premier interrupteur 51 et le deuxième interrupteur 55, soit d'ouvrir conjointement le premier interrupteur 51 et le deuxième interrupteur 55.

Lorsque le premier interrupteur 51 et le deuxième interrupteur 55 sont fermés le troisième moteur M3 est alors commandé par le signal de commande CMD_C3 du premier calculateur secondaire simplex C3.

En revanche, lorsque le premier interrupteur 51 et/ou le deuxième interrupteur 55 est/sont ouvert(s) le troisième moteur M3 n'est alors plus commandé par le signal de commande CMD_C3 du premier calculateur secondaire simplex C3.

De plus, le dispositif de basculement 50 peut comporter un troisième interrupteur 52 et un quatrième interrupteur 53 connectés en série au deuxième calculateur secondaire simplex C4 pour pouvoir recevoir le signal de commande CMD_C4 correspondante.

Le quatrième interrupteur 53 peut être relié électriquement, éventuellement par une porte inverseuse 54, au signal de validité VAL_C3 du premier calculateur secondaire simplex C3 pour être placé dans un état ouvert ou fermé en fonction du signal de validité VAL_C3 reçu.

Le troisième interrupteur 52 est alors quant à lui relié électriquement au signal de validité VAL_C4 du deuxième calculateur secondaire simplex C4.

Ainsi, lorsque les troisième et quatrième interrupteurs 52, 53 sont fermés le troisième moteur M3 est alors commandé par le signal de commande CMD_C4 du deuxième calculateur secondaire simplex C4.

Chaque interrupteur peut prendre par exemple la forme d'un relais, d'un transistor de type MOSFET, ou autres.

De plus, le troisième moteur M3 peut être connecté à la fois à deux premières connexions de surveillance secondaires C32, C33 du premier calculateur secondaire simplex C3 et à deux deuxièmes connexions de surveillance secondaires C42, C43 du deuxième calculateur secondaire simplex C4 pour pouvoir émettre un troisième signal de surveillance représentatif d'un état moteur du troisième moteur M3.

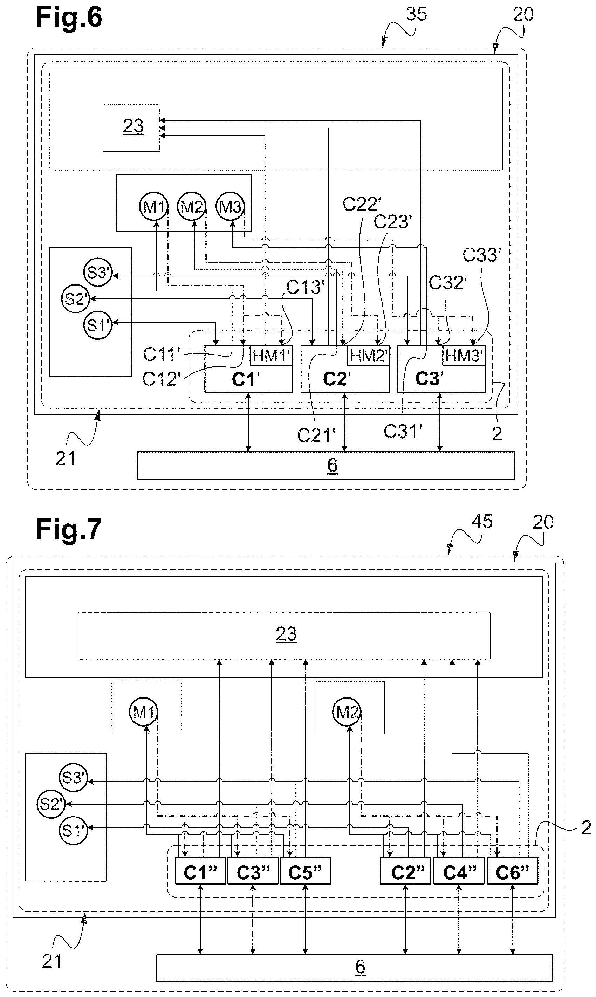

Tel que représenté à la figure 6, le système 35 peut comporter trois moteurs M1, M2, M3 reliés respectivement à un calculateur primaire simplex C1', un calculateur secondaire simplex C2' et un calculateur tertiaire simplex C3', les calculateurs simplex C1', C2' et C3' étant tous dissimilaires entre eux.

Comme précédemment, un premier moteur M1 peut alors être connecté à deux connexions de surveillance primaires C12', C13' du calculateur primaire simplex C1' pour leur transmettre un premier signal de surveillance représentatif d'un état moteur du premier moteur M1. L'une des deux connexions de surveillance primaires C12', C13' est alors reliée avec une première brique de surveillance matérielle HM1' du calculateur primaire simplex C1'.

De même, le deuxième moteur M2 peut être connecté à deux connexions de surveillance secondaires C22', C23' du calculateur secondaire simplex C2' pour leur transmettre un deuxième signal de surveillance représentatif d'un état moteur du deuxième moteur M2. L'une des deux connexions de surveillance secondaire C22', C23' est alors reliée avec une deuxième brique de surveillance matérielle HM2' du calculateur secondaire simplex C2'.

En outre, le troisième moteur M3 peut être connecté à la fois à deux connexions de surveillance tertiaires C32', C33' du calculateur tertiaire simplex C3'. L'une des deux connexions de surveillance tertiaire C32', C33' est alors reliée avec une troisième brique de surveillance matérielle HM3' du calculateur tertiaire simplex C3'.

De plus, le système 35 peut alors comporter un senseur de position primaire S1', un senseur de position secondaire S2' et un senseur de position tertiaire S3' tous dissimilaires entre eux.

Le senseur de position primaire S1' est alors relié électriquement au calculateur primaire simplex C1', le senseur de position secondaire S2' est quant à lui relié électriquement au calculateur secondaire simplex C2' et le senseur de position tertiaire S3' est relié électriquement calculateur tertiaire simplex C3'.

Tel que représenté à la figure 7, le système 45 peut comporter deux calculateurs primaires simplex C1", C2" identiques, deux calculateurs secondaires simplex C3", C4" identiques et dissimilaires des deux calculateurs primaires simplex C1", C2" et deux calculateurs tertiaires simplex C5", C6" identiques et dissimilaires à la fois des deux calculateurs primaires simplex C1", C2" et des deux calculateurs secondaires simplex C3", C4".

Dans ce cas, le senseur de position primaire S1' est alors relié électriquement aux deux calculateurs primaires simplex C1", C2", le senseur de position secondaire S2' est quant à lui relié électriquement aux deux calculateurs secondaires simplex C3", C4" et le senseur de position tertiaire S3' est relié électriquement aux deux calculateurs tertiaires simplex C5", C6".

De plus, le système 45 peut comporter un premier moteur M1 relié à la fois à un calculateur primaire simplex C1", un calculateur secondaire simplex C3" et un calculateur tertiaire simplex C5" et un second moteur M2 relié à la fois à un calculateur primaire simplex C2", un calculateur secondaire simplex C4" et un calculateur tertiaire simplex C6".

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Système (5, 15, 25, 35, 45) de commande de vol électrique pour contrôler un aéronef (1), le système (5, 15, 25, 35, 45) de commande de vol comportant au moins un sous-ensemble d'acquisition (2) d'une commande de pilotage pour acquérir ladite commande de pilotage à partir d'une manœuvre d'un organe de pilotage (20) associé manœuvrable par un pilote dudit aéronef (1) selon au moins un axe de pilotage, ledit système (5, 15, 25, 35, 45) de commande de vol comportant au moins trois senseurs de position (S1, S2, S3, S4, S1', S2', S3') par axe de pilotage, chaque senseur de position (S1, S2, S3, S4, S1', S2', S3') générant une information de position dudit organe de pilotage (20) et étant en communication avec ledit au moins un sous-ensemble d'acquisition (2),
chaque sous-ensemble d'acquisition (2) comportant au moins trois calculateurs simplex (C1, C1', C1", C2, C2', C2", C3, C3', C3", C4, C4", C5", C6") ayant chacun une unique voie de calcul reliée à un desdits au moins trois senseurs de position (S1, S2, S3, S4, S1', S2', S3'),
**caractérisé en ce que**, au moins deux calculateurs (C1, C1', C1", C2, C2', C2", C3, C3', C3", C4, C4", C5", C6") parmi lesdits au moins trois calculateurs simplex (C1, C1', C1", C2, C2', C2", C3, C3', C3", C4, C4", C5", C6") sont dissimilaires et au moins deux senseurs de position (S1, S2, S3, S4, S1', S2', S3') parmi lesdits au moins trois senseurs de position (S1, S2, S3, S4, S1', S2', S3') sont dissimilaires.

2. Système selon la revendication 1,
**caractérisé en ce que** ledit système (15) de commande de vol comporte au moins deux moteurs (M1, M2, M3, M4) configurés pour appliquer conjointement une loi d'effort à une partie mobile (21) dudit organe de pilotage (20).

3. Système selon l'une quelconques des revendications 1 à 2,
**caractérisé en ce que** lesdits au moins trois calculateurs simplex (C1, C1', C1", C2, C2', C2", C3, C3', C3", C4, C4", C5", C6" comportent deux calculateurs primaires simplex (C1, C2) identiques et deux calculateurs secondaires simplex (C3, C4) identiques et dissimilaires des deux calculateurs primaires simplex (C1, C2).

4. Système selon les revendications 2 et 3,
**caractérisé en ce que** lesdits au moins deux moteurs (M1, M2, M3, M4) comportent quatre moteurs, deux moteurs (M1, M2) étant individuellement connectés à deux calculateurs primaires simplex (C1, C2) via deux connexions de commande (C11, C21) et deux autres moteurs (M3, M4) étant individuellement connectés à deux calculateurs secondaires simplex (C3, C4) via deux autre connexions de commande (C31, C41) pour pouvoir recevoir un signal de commande représentatif de ladite loi d'effort à appliquer à ladite partie mobile dudit organe de pilotage (20), chaque moteur (M1, M2, M3, M4) étant connecté soit à deux connexions de surveillance primaires (C12, C13, C22, C23) desdits deux calculateurs primaires simplex (C1, C2), soit à deux connexions de surveillance secondaires (C32, C33, C42, C43) desdits deux calculateurs secondaires simplex (C3, C4) pour pouvoir émettre un signal de surveillance représentatif d'un état moteur.

5. Système (25) selon les revendications 2 et 3
**caractérisé en ce que** lesdits au moins deux moteurs (M1, M2, M3, M4) comportent :
• un premier moteur (M1) connecté à une première connexion de commande (C11) d'un premier calculateur primaire simplex (C1) pour pouvoir recevoir un premier signal de commande représentatif de ladite loi d'effort à appliquer audit organe de pilotage (20),
• un deuxième moteur (M2) connecté à une seconde connexion de commande (C21) d'un second calculateur primaire simplex (C2) pour pouvoir recevoir un deuxième signal de commande représentatif de ladite loi d'effort à appliquer audit organe de pilotage (20), et
• un troisième moteur (M3) connecté sur commande soit à une première connexion de commande (C31) d'un premier calculateur secondaire simplex (C3), soit à une seconde connexion de commande (C41) d'un second calculateur secondaire simplex (C4) pour pouvoir recevoir un troisième signal de commande représentatif de ladite loi d'effort à appliquer audit organe de pilotage (20).

6. Système selon la revendication 5,
**caractérisé en ce que** :
• ledit premier moteur (M1) est connecté à deux premières connexions de surveillance primaires (C12, C13) dudit premier calculateur primaire simplex (C1) pour pouvoir émettre un premier signal de surveillance représentatif d'un état moteur dudit premier moteur (M1),
• ledit deuxième moteur (M2) est connecté à deux deuxièmes connexions de surveillance primaires (C22, C23) dudit deuxième calculateur primaire simplex (C2) pour pouvoir émettre un deuxième signal de surveillance représentatif d'un état moteur dudit deuxième moteur (M2), et
• ledit troisième moteur (M3) est connecté à la fois à deux premières connexions de surveillance secondaires (C32, C33) dudit premier calculateur secondaire simplex (C3) et à deux deuxièmes connexions de surveillance secondaires (C42, C43) dudit deuxième calculateur secondaire simplex (C4) pour pouvoir émettre un troisième signal de surveillance représentatif d'un état moteur dudit troisième moteur (M3).

7. Système selon l'une quelconque des revendications 5 à 6,
**caractérisé en ce que** ledit troisième moteur (M3) est connecté électriquement à un dispositif de basculement (50), ledit dispositif de basculement (50) étant relié électriquement audit premier calculateur secondaire simplex (C3) et audit deuxième calculateur secondaire simplex (C4) et étant configuré pour connecter ledit troisième moteur (M3) soit audit premier calculateur secondaire simplex (C3), soit audit deuxième calculateur secondaire simplex (C4), lesdits premier calculateur secondaire simplex (C3) et deuxième calculateur secondaire simplex (C4) étant auto-monitorés et communiquant un premier signal de validité (VAL_C3) et un second signal de validité (VAL_C4) respectivement à, d'une part, un premier interrupteur (51) et un deuxième interrupteur (55) reliés en série et, d'autre part, un troisième interrupteur (52) et un quatrième interrupteur (53) reliés en série dudit dispositif de basculement (50).

8. Système (5, 15, 25) selon l'une quelconque des revendications 1 à 7,
**caractérisé en ce que** lesdits au moins trois senseurs de position (S1, S2, S3, S4) comportent deux senseurs de position primaires (S1, S2) identiques et deux senseurs de position secondaires (S3, S4) identiques et dissimilaires des deux senseurs de position primaires (S1, S2).

9. Système (35) selon la revendication 2,
**caractérisé en ce que** lesdits au moins trois calculateurs simplex (C1, C1', C1", C2, C2', C2", C3, C3', C3", C4, C4", C5", C6") comportent un calculateur primaire simplex (C1'), un calculateur secondaire simplex (C2') et un calculateur tertiaire simplex (C3') tous dissimilaires entre eux.

10. Système (45) selon la revendication 2,
**caractérisé en ce que** lesdits au moins trois calculateurs simplex (C1, C1', C1", C2, C2', C2", C3, C3', C3", C4, C4", C5", C6") comportent deux calculateurs primaires simplex (C1", C2") identiques, deux calculateurs secondaires simplex (C3", C4") identiques et dissimilaires des deux calculateurs primaires simplex (C1", C2") et deux calculateurs tertiaires simplex (C5", C6") identiques et dissimilaires à la fois des deux calculateurs primaires simplex (C1", C2") et des deux calculateurs secondaires simplex (C3", C4").

11. Système (35, 45) selon l'une quelconque des revendications 9 à 10,
**caractérisé en ce que** lesdits au moins trois senseurs de position (S1, S2, S3, S4, S1', S2', S3') comportent un senseur de position primaire (S1'), un senseur de position secondaire (S2') dissimilaire du senseur de position primaire (S1') et un senseur de position tertiaire (S3') dissimilaire à la fois du senseur de position primaire (S1') et du senseur de position secondaire (S2').

12. Système (5, 15, 25, 35, 45) selon l'une quelconque des revendications 1 à 11,
**caractérisé en ce que** ledit au moins un sous-ensemble d'acquisition (2) est intégré dans ledit organe de pilotage (20).

13. Aéronef (1) muni d'un système (5, 15, 25, 35, 45) de commande de vol électrique pour contrôler ledit aéronef (1),
**caractérisé en ce que** ledit système (5, 15, 25, 35, 45) de commande de vol est selon l'une quelconque des revendications 1 à 12.
